# EUROPEAN PATENT APPLICATION

(11) **EP 4 708 511 A1**
(43) Date of publication of application: **11.03.2026**
(21) Application number: 24918951.5
(22) Date of filing: 08.11.2024
(51) Int. Cl.: H01M 50/244, H01M 50/213, H01M 50/291, H01M 50/249, H01M 50/342

(54) **BATTERY PACK AND VEHICLE COMPRISING SAME**

(30) Priority: 17.01.2024 KR 20240007617
(71) Applicant: LG Energy Solution, Ltd., Seoul 07335 (KR)
(72) Inventor: JUNG, In-Hyuk, Daejeon 34122 (KR); PARK, So-Jeong, Daejeon 34122 (KR); SONG, Jong-Min, Daejeon 34122 (KR); AHN, Jun-Young, Daejeon 34122 (KR); OH, Kwang-Keun, Daejeon 34122 (KR); LEE, Yong-Ho, Daejeon 34122 (KR); YANG, Jin-Oh, Daejeon 34122 (KR)
(74) Representative: Plasseraud IP
(86) International application number: PCT/KR2024/017597
(87) International publication number: WO 2025/154917

(57) **Abstract**

Disclosed is a battery pack having a stable fixing structure. The battery pack includes a pack case having a predetermined accommodation space; and a cell array stack including a plurality of cell array structures that are stacked in multi stages, the cell array stack having a case mounting portion fixed to at least one side wall of the pack case.

## Description

### TECHNICAL FIELD

This application is based on and claims priority from Korean Patent Application No. 10-2024-0007617, filed on January 17, 2024, with the Korean Intellectual Property Office, the disclosure of which is incorporated herein in its entirety by reference.

The present disclosure relates to a battery pack and a vehicle including the battery pack, and more particularly, to a battery pack with a stable fixing structure and a vehicle including the battery pack.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing energy efficiency and environment friendliness in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.2V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module composed of at least one battery cell first, and then configure a battery pack by using at least one battery module and adding other components.

Recently, there is a trend of configuring battery packs in a multi-stage stacking structure, which is a structure including battery cells according to the design of the structure or the large capacity when mounted on a structure such as a vehicle.

The battery pack having such a multi-stage stacking structure has a greater risk of movement in the stacking direction, compared to a single-layer structure, and there is a greater risk of detachment of the stacking structure due to external impact, etc. Therefore, when implementing the structure of battery cells having a multi-stage stacking structure in a battery pack, more stable fixation to the pack case of the battery pack is required.

Therefore, there is a need to find a way to provide a battery pack having a more stable fixing structure, and a vehicle including the same.

### DISCLOSURE

### Technical Problem

Therefore, the present disclosure is directed to providing a battery pack that may implement a more stable fixing structure, and a vehicle including the battery pack.

In addition, the present disclosure is directed to providing a battery pack that may secure a venting space capable of preventing chain ignition during a thermal event of a battery cell, and a vehicle including the battery pack.

However, the technical problems that the present disclosure seeks to solve are not limited to the above, and other problems not mentioned herein will be clearly understood by those skilled in the art from the following description.

### Technical Solution

In one aspect of the present disclosure, there is provided a battery pack comprising: a pack case having a predetermined accommodation space; and a cell array stack including a plurality of cell array structures that are stacked in multi stages, the cell array stack having a case mounting portion fixed to at least one side wall of the pack case.

Also, preferably, the at least one side wall of the pack case may have a stack fixing portion that is coupled with the case mounting portion, and the stack fixing portion may be provided to correspond to a shape of the case mounting portion.

Also, preferably, the stack fixing portion may be formed integrally with the pack case.

Also, preferably, the stack fixing portion may be formed as an insert groove having a predetermined depth on the at least one side wall of the pack case, and the case mounting portion may be fitted into the stack fixing portion.

Also, preferably, the stack fixing portion may be prepared by cutting the pack case to have a predetermined depth.

Also, preferably, the battery pack may further comprise at least one fastening member configured to connect the case mounting portion and the stack fixing portion.

Also, preferably, the case mounting portion may be provided in plurality for each of the cell array structures, and the case mounting portions of the respective cell array structures may be arranged to be staggered.

Also, preferably, the cell array stack may include a mounting guide provided between the plurality of cell array structures and the pack case, so that the case mounting portion is provided therein.

Also, preferably, the mounting guide may at least partially cover both side surfaces of the plurality of cell array structures in a stacking direction.

Also, preferably, the mounting guide may be interposed between the plurality of cell array structures in a stacking direction.

Also, preferably, the mounting guide may separate the plurality of cell array structures from each other in a stacking direction so that a predetermined venting space is formed between the plurality of cell array structures.

Also, preferably, the mounting guide may include a guide body configured to at least partially cover both side surfaces of the plurality of cell array structures in a stacking direction; and a support connected to the guide body and arranged between the plurality of cell array structures in the stacking direction.

Also, preferably, the support may be provided in plurality, and the plurality of supports may be arranged to be spaced apart from each other by a predetermined distance to form a venting space between the plurality of cell array structures in the stacking direction.

Also, preferably, the support may have a protrusion on which a cell array structure, which is arranged at an upper side among the plurality of cell array structures in the stacking direction, is placed.

Also, preferably, at least one venting opening may be formed in the support.

Also, preferably, a plurality of venting openings may be formed in the support, and the plurality of venting openings may be provided between the protrusions.

Also, preferably, the mounting guide may be provided as a pair, and the pair of mounting guides may cover both side surfaces of the plurality of cell array structures in a stacking direction, respectively.

Also, preferably, the pair of mounting guide may include a side cover configured to cover a side surface of the plurality of cell array structures and having the case mounting portion; and a fitting portion configured to protrude from the side cover and fitted between the plurality of cell array structures in the stacking direction to a predetermined depth.

Also, preferably, the fitting portion may be formed integrally with the side cover and may be formed by bending from the side cover.

**In** addition, the present disclosure also provides a vehicle, comprising at least one battery pack according to the former embodiments.

### Advantageous Effects

According to various embodiments as above, it is possible to provide a battery pack that may implement a more stable fixing structure, and a vehicle including the battery pack.

In addition, according to various embodiments as above, it is possible to provide a battery pack that may secure a venting space capable of preventing chain ignition during a thermal event of a battery cell, and a vehicle including the battery pack.

Moreover, various other additional effects may be achieved by various embodiments of the present disclosure. The various effects of the present disclosure will be explained in detail in each embodiment, or the effects that can be easily understood by those skilled in the art will not be described herein.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery pack according to an embodiment of the present disclosure.
FIG. 2 is a plan view showing the battery pack according to an embodiment of the present disclosure.
FIG. 3 is an enlarged perspective view showing a part A of the battery pack of FIG. 2.
FIG. 4 is an exploded perspective view showing the battery pack according to an embodiment of the present disclosure.
FIG. 5 is an enlarged view showing a part B of the battery pack of FIG. 4.
FIG. 6 is a drawing for illustrating a cell array stack of the battery pack of FIG. 4.
FIG. 7 is an exploded perspective view showing the cell array stack of FIG. 6.
FIG. 8 is an exploded perspective view showing a battery pack according to another embodiment of the present disclosure.
FIG. 9 is an exploded perspective view showing a cell array stack of the battery pack of FIG. 8.
FIG. 10 is a drawing for illustrating a mounting guide of the cell array stack of FIG. 9.
FIG. 11 is a plan view showing the mounting guide of FIG. 10.
FIG. 12 is a side cross-sectional view showing a battery pack according to another embodiment of the present disclosure.
FIG. 13 is an exploded perspective view showing a battery pack according to still another embodiment of the present disclosure.
FIG. 14 is an exploded perspective view showing a cell array stack of the battery pack of FIG. 13.
FIG. 15 is a side cross-sectional view showing a mounting guide of the cell array stack of FIG. 14.
FIG. 16 is a side cross-sectional view showing a battery pack according to still another embodiment of the present disclosure.
FIG. 17 is a drawing for illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art these terms may vary depending on the location of a target object or the location of an observer.

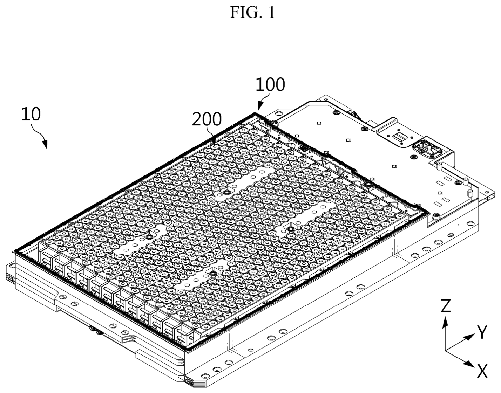

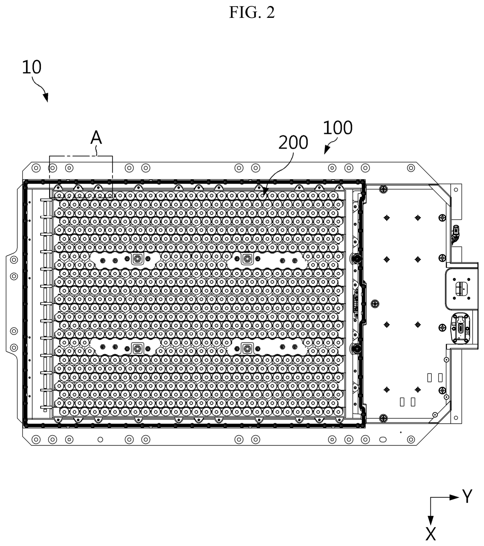

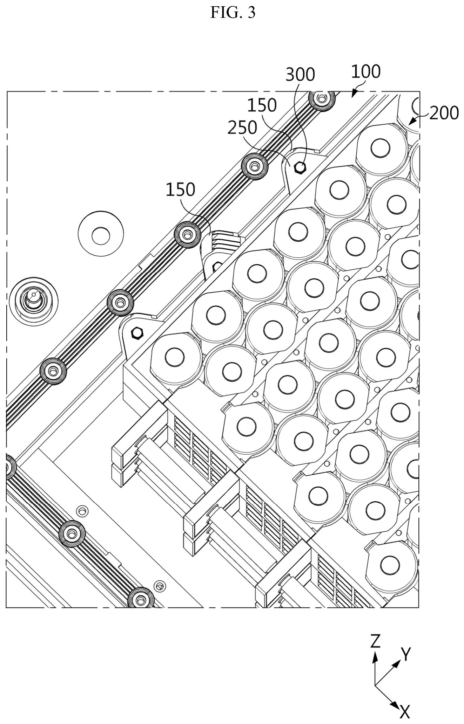

FIG. 1 is a diagram for illustrating a battery pack 10 according to an embodiment of the present disclosure, FIG. 2 is a plan view showing the battery pack 10 according to an embodiment of the present disclosure, and FIG. 3 is an enlarged perspective view showing a part A of the battery pack 10 of FIG. 2.

Referring to FIGS. 1 to 3, the battery pack 10 may include a pack case 100 and a cell array stack 200.

The pack case 100 forms the outer appearance of the battery pack 10 and may accommodate various components that make up the battery pack 10. For this purpose, a predetermined accommodation space may be provided in the pack case 100.

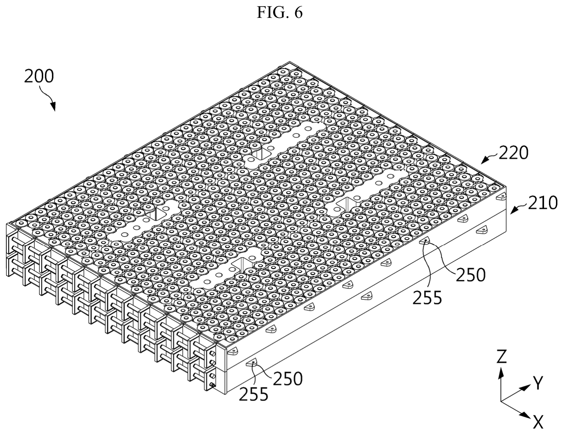

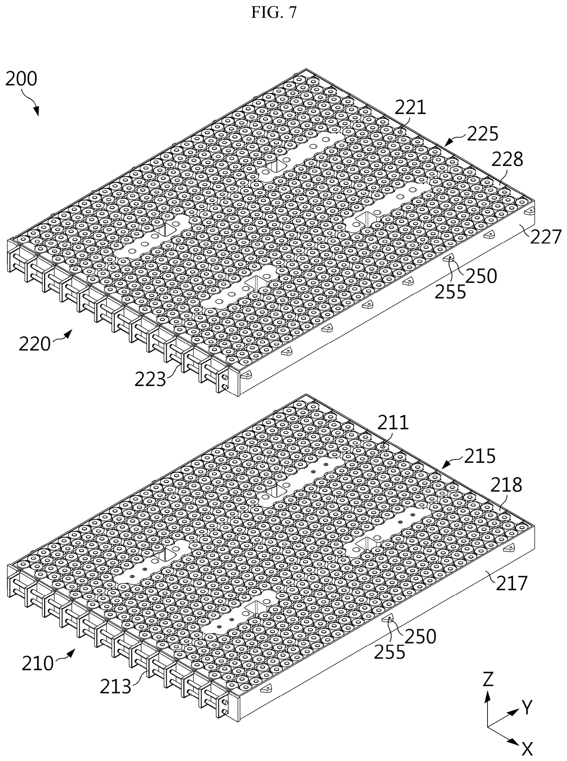

The cell array stack 200 may include a plurality of cell array structures 210, 220 (see FIGS. 6 and 7) that are stacked in multi stages. Each of the plurality of cell structures 210, 220 described below may include a plurality of battery cells 211, 221 (see FIGS. 6 and 7). The plurality of battery cells 211, 221 are as secondary batteries, and may be provided as cylindrical secondary batteries.

The cell array stack 200 including a plurality of cell array structures 210, 220 that are stacked in multi stages may have a case mounting portion 250 that is fixed to at least one side wall of the pack case 100. When structures such as the plurality of cell array structures 210, 220 including the plurality of battery cells 211, 221 are accommodated in the pack case 100 in a multi-stage stacked state, the possibility of movement or distortion of the stacked cell array structures 210, 220 in the pack case 100 is much greater than in a single-layer structure due to the multi-stage stacking structure.

According to an embodiment of the present disclosure, the cell array stack 200 having a multi-stage stacking structure may be more stably fixed when the cell array stack 200 is accommodated in the pack case 100 through the case mounting portion 250 fixed to at least one side wall of the pack case 100.

Therefore, in an embodiment of the present disclosure, it is possible to effectively prevent the occurrence of movement or distortion that may occur in the plurality of cell array structures 210, 220 stacked within the pack case 100 through the case mounting portion 250.

The pack case 100 may have a stack fixing portion 150 for coupling with the case mounting portion 250. The stack fixing portion 150 may be provided on at least one side wall of the pack case 100. In this embodiment, the stack fixing portion 150 may be provided on both side walls (X-axis direction) of the pack case 100 facing both sides of the cell array stack 200 when the cell array stack 200 is accommodated within the pack case 100.

The shape of the stack fixing portion 150 may be provided to correspond to the shape of the case mounting portion 250. The shape of the stack fixing portion 150 corresponding to the shape of the case mounting portion 250 may mean a shape that is coupled with the case mounting portion 250 without causing interference with the case mounting portion 250. For example, when the shape of the case mounting portion 250 is convex, the shape of the stack fixing portion 150 may be provided as a concave shape corresponding to the convex shape of the case mounting portion 250. In this way, according to an embodiment of the present disclosure, the case mounting portion 250 and the stack fixing portion 150 may be coupled to each other without interference or collision between the two components.

The stack fixing portion 150 may be formed integrally with the pack case 100. According to an embodiment of the present disclosure, the cell array stack 200 may be stably fixed through the stack fixing portion 150 formed integrally with the pack case 100 without mounting any additional components, etc. for connection with the cell array stack 200 on the pack case 100.

Hereinafter, the battery pack 10 according to an embodiment of the present disclosure will be described in more detail.

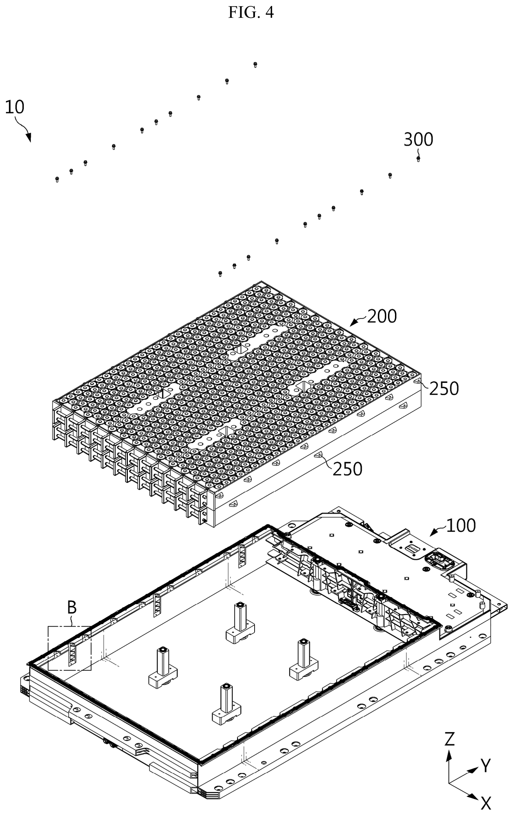

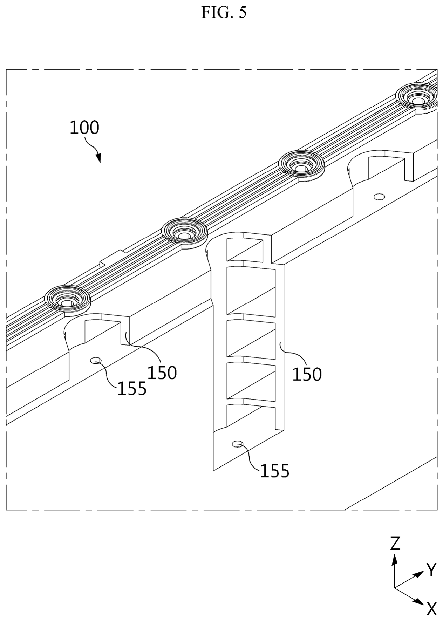

FIG. 4 is an exploded perspective view showing the battery pack 10 according to an embodiment of the present disclosure, FIG. 5 is an enlarged view showing a part B of the battery pack 10 of FIG. 4, FIG. 6 is a drawing for illustrating a cell array stack 200 of the battery pack 10 of FIG. 4, and FIG. 7 is an exploded perspective view showing the cell array stack 200 of FIG. 6.

Referring to FIGS. 4 to 7 and the preceding drawings, the stack fixing portion 150 may be provided in plurality, and may be provided on both side walls of the pack case 100, respectively. In addition, the stack fixing portion 150 may be provided in plurality on both side walls of the pack case 100, and may be arranged to be spaced apart from each other by a predetermined distance along the longitudinal direction (Y-axis direction) of the pack case 100. The stack fixing portion 150 is provided in a number corresponding to the number of the case mounting portions 250, and may be provided at a predetermined location on at least one side wall of the pack case 100 that may be coupled to the case mounting portion 250.

The stack fixing portion 150 may be formed as an insert groove having a predetermined depth in at least one side wall of the pack case 100. The stack fixing portion 150 formed as the insert groove may be provided in plurality on both side walls of the pack case 100, respectively.

The predetermined depth of the stack fixing portion 150 may be a depth that may accommodate the case mounting portion 250. The plurality of stack fixing portions 150 may have predetermined depths in both the edge direction (X-axis direction) of the pack case 100 and the height direction (Z-axis direction) of the pack case 100.

The plurality of stack fixing portions 150 may have various depths corresponding to positions of the case mounting portions 250 in the height direction (Z-axis direction). For example, some of the plurality of stack fixing portions 150 may have a depth capable of accommodating the case mounting portion 250 of the lower cell array structure 210 among the cell array structures 210, 220 stacked in multi stages in the height direction (Z-axis direction), and some of the plurality of stack fixing portions 150 may have a depth capable of accommodating the case mounting portion 250 of the upper cell array structure 210 among the multi-stage stacked cell array structures 210, 220. Among the plurality of stack fixing portions 150, the stack fixing portions 150 that accommodate the case mounting portion 250 of the lower-layer cell array structure 210 among the cell array structures 210, 220 may be formed to have a deeper depth in the height direction (Z-axis direction) of the pack case 100 than the stack fixing portions 150 that accommodate the case mounting portion 250 of the upper-layer cell array structure 220 among the cell array structures 210, 220.

The plurality of stack fixing portions 150 may have a depth such that the case mounting portion 250 does not protrude out of the upper surface (+Z-axis direction) of the pack case 100 in the height direction (Z-axis direction) of the pack case 100 when the case mounting portion 250 is placed thereon in the height direction (Z-axis direction) of the pack case 100. Accordingly, in this embodiment, the case mounting portion 250 of the cell array stack 200 may be coupled to the pack case 100 without protrusion of the case mounting portion 250 in the height direction (Z-axis direction) of the pack case 100, thereby enabling the battery pack 10 to be configured more compactly.

**In** addition, the plurality of stack fixing portions 150 may have a depth that does not cause the fastening member 300, explained later, to protrude beyond the upper surface (+Z-axis direction) of the pack case 100 in the height direction (Z-axis direction) of the pack case 100 when fastening the fastening member 300. Accordingly, in this embodiment, the pack case 100 and the cell array stack 200 may be connected to each other without increasing the size of the battery pack 10 in the height direction (Z-axis direction).

The case mounting portion 250 may be fitted into the stack fixing portion 150. The case mounting portion 250 may have a shape that protrudes by a predetermined size in both directions (X-axis direction) of the cell array stack 200 so as to be fitted into the stack fixing portion 150. The stack fixing portion 150 may have a concave shape corresponding to the protruding shape of the case mounting portion 250 so that the case mounting portion 250 may be fitted therein. In this embodiment, since the case mounting portion 250 is fitted into the stack fixing portion 150 at both sides (X-axis direction) of the cell array stack 200, movement of the cell array stack 200 that may occur in the longitudinal direction (Y-axis direction) of the pack case 100 may be effectively prevented.

The stack fixing portion 150 may be provided by cutting the pack case 100 to have a predetermined depth. This cutting process may be performed on the side walls at both sides of the pack case 100. In this embodiment, since the stack fixing portion 150 is integrally formed from the pack case 100 through the cutting process, no separate additional component is required to guide the coupling with the cell array stack 200. Therefore, in this embodiment, the manufacturing cost of the battery pack 10 is reduced by omitting the additional component, and an assembly process according to assembling the additional component may also be omitted, thereby reducing the overall process tact time.

The battery pack 10 may include a fastening member 300. The fastening member 300 may connect the case mounting portion 250 and the stack fixing portion 150. The fastening member 300 may be provided as a bolting member. The fastening member 300 may be provided in plurality. The fastening member 300 may be fastened to the stack fixing portion 150 by penetrating the case mounting portion 250. To this end, a mounting hole 255 passing through the fastening member 300 may be formed in the case mounting portion 250, and a fastening hole 155 coupled to the fastening member 150 through screwing or the like may be formed in the stack fixing portion 150. In this embodiment, the fastening member 300 may guide more rigid and stable coupling between the case mounting portion 250 and the stack fixing portion 150.

The case mounting portion 250 may be provided in plurality for each of the cell array structures 210, 220. The case mounting portions 250 of the respective cell array structures 210, 220 may be arranged to be staggered. Being arranged to be staggered may mean that the case mounting portions 250 of the cell array structures 210, 220 of each layer are not arranged on the same line in the height direction (Z-axis direction) of the cell array stack 200. This staggered arrangement may prevent mutual interference when the case mounting portions 250 are mounted toward the stack fixing portion 150, and may further increase the coupling stability of the multi-stage stacked cell array structures 210, 220.

Hereinafter, the cell array stack 200 of the battery pack 10 according to an embodiment of the present disclosure will be described in more detail.

The cell array stack 200 may include a first cell array structure 210, a second cell array structure 220, and the case mounting portion 250.

The first cell array structure 210 may form a lower layer of the multi-stage stacking structure at the bottom portion of the cell array stack 200. The first cell array structure 210 may include a battery cell 211, a cooling tube 213, and a side frame 215.

The battery cell 211 is a secondary battery and may be provided as a cylindrical secondary battery, a pouch-shaped secondary battery, or a prismatic secondary battery. Hereinafter, in this embodiment, the battery cell 211 will be described as being provided as a cylindrical secondary battery.

The battery cell 211 may be provided in plurality. The plurality of battery cells 211 may be provided to be arranged along the longitudinal direction (Y-axis direction) and the width direction (X-axis direction) of the first cell array structure 210.

The cooling tube 213 is for cooling the plurality of battery cells 211 and may have a predetermined length along the longitudinal direction (Y-axis direction) of the first cell array stack 210. A cooling path may be provided within the cooling tube 213 for the flow of a cooling medium for cooling the battery cells 211.

The cooling tube 213 may be provided in plurality. The plurality of cooling tubes 213 may be respectively arranged between two rows of battery cells 211 and may be arranged to come into contact with the side surface of the facing battery cell 211 so as to increase cooling performance.

The side frame 215 is configured to accommodate and support the battery cells 211 and the cooling tubes 213 and may include a side wall 217 and a side structure 218.

The side wall 217 is provided as a pair and may be provided on both outermost sides (+Y-axis direction and -Y-axis direction) of the side frame 215. The case mounting portion 250 may be provided on the pair of side walls 217. The case mounting portion 250 may be provided in plurality on each side wall 217. The plurality of case mounting portions 250 may be arranged to be spaced apart from each other by a predetermined distance along the longitudinal direction (Y-axis direction) of each side wall 217.

The side structure 218 may be provided in plurality. The plurality of side structures 218 may be provided to be coupled to each other and may accommodate and support the plurality of battery cells 211 and the plurality of cooling tubes 213.

The second cell array structure 220 may form an upper layer of the multi-stage stacking structure at the bottom portion of the cell array stack 200. The second cell array structure 220 is placed on the first cell array structure 210 and may form a multi-stage stacking structure together with the first cell array structure 210.

The second cell array structure 220 may include a plurality of battery cells 221, a plurality of cooling tubes 223, and a side frame 225.

The plurality of battery cells 221 and the plurality of cooling tubes 223 are substantially identical or similar to the plurality of battery cells 221 and the plurality of cooling tubes 223 of the first cell array structure 210, and therefore will not be described in detail again.

The side frame 225 may include a pair of side walls 227 and a plurality of side structures 228. The plurality of side structures 228 are substantially the same as or similar to the plurality of side structures 218 of the first cell array structure 210, and therefore will not be described in detail again.

The pair of side walls 227 may have the case mounting portion 250. The plurality of case mounting portions 250 may be provided on each side wall 227. The plurality of case mounting portions 250 may be spaced apart from each other by a predetermined distance along the longitudinal direction (Y-axis direction) of each side wall 227.

The case mounting portions 250 provided on the side wall 227 of the second cell array structure 220 may be arranged to be staggered from the case mounting portions 250 provided on the side wall 217 of the first cell array structure 210. As described above, this is to prevent interference or collision between the case mounting portions 250 in various layers of the cell array stack 200 of the multi-stage stacking structure when the case mounting portions 250 are coupled with the stack fixing portion 150 of the pack case 100.

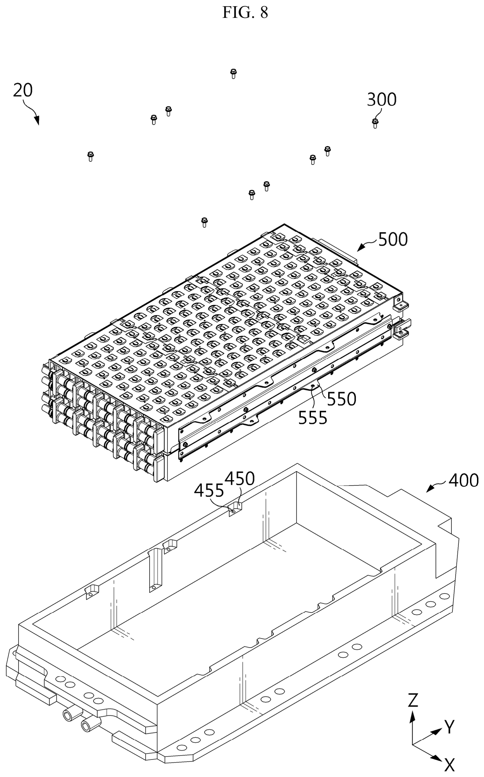

FIG. 8 is an exploded perspective view showing a battery pack 20 according to another embodiment of the present disclosure.

The battery pack 20 according to this embodiment is similar to the battery pack 10 of the former embodiment, so features substantially identical or similar to those of the former embodiment will not be described again, and features different from the former embodiment will be described in detail.

Referring to FIG. 8, the battery pack 20 may include a pack case 400 and a cell array stack 500. Also, the battery pack 20 may include a plurality of fastening members 300.

The pack case 400 may include a stack fixing portion 450. The stack fixing portion 450 may include a fastening hole 455. The fastening member 300, the pack case 400 and the stack fixing portion 450 are similar to the fastening member 300, the pack case 100 and the stack fixing portion 150 of the former embodiment, and therefore will not be described in detail again.

The cell array stack 500 may include a plurality of cell array structures 510, 520 and a mounting guide 530.

The plurality of cell array structures 510, 520 may be stacked on each other to form a multi-stage stacking structure in the height direction (Z-axis direction) of the cell array stack 500. The plurality of cell array structures 510, 520 will be described later in more detail.

The mounting guide 530 may be provided between the plurality of cell array structures 510, 520 and the pack case 100. The mounting guide 530 may include a case mounting portion 550 having a mounting hole 555 formed therein.

The mounting guide 530 may guide a more stable multi-stage stacking structure of the plurality of cell array structures 510, 520 while also guiding a more stable fixation of the plurality of cell array structures 510, 520 toward the pack case 400.

The mounting guide 530 may at least partially cover both side surfaces of the plurality of cell array structures 510, 520 in the stacking direction (Z-axis direction). The mounting guide 530 may reinforce the rigidity of the side surface of the cell array structures 510, 520 of the multi-stage stacking structure. When an external impact is applied to the side surface of the battery pack 20, the mounting guide 530 may preferentially receive and buffer the external force due to impact, thereby minimizing the amount of impact applied to the cell array structures 510, 520.

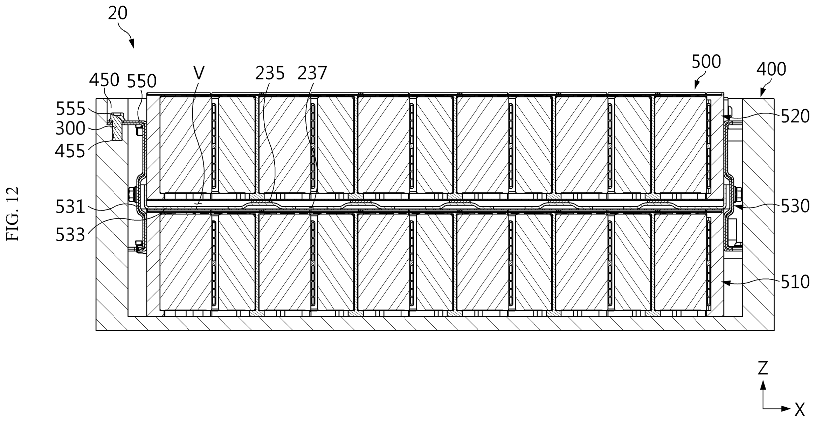

The mounting guide 530 may be interposed between the plurality of cell array structures 510, 520 in the stacking direction (Z-axis direction). This arrangement structure of the mounting guide 530 forms a venting space V (see FIG. 12) between the cell array structures 510, 520, explained later. The venting space V will be described later in more detail.

Hereinafter, the cell array stack 500 of the battery pack 20 will be described in more detail.

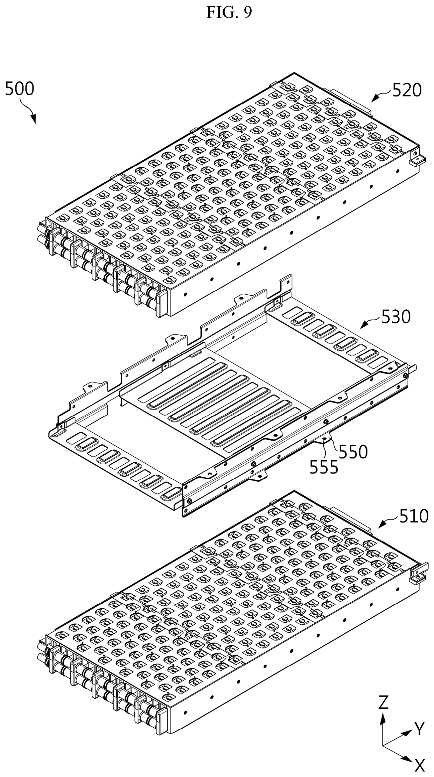

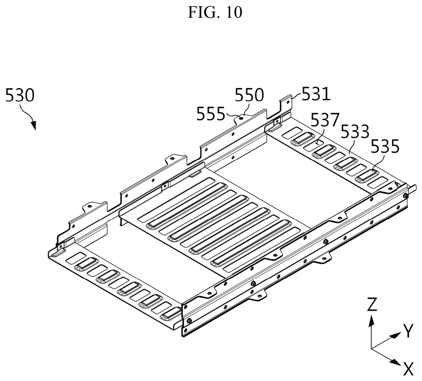

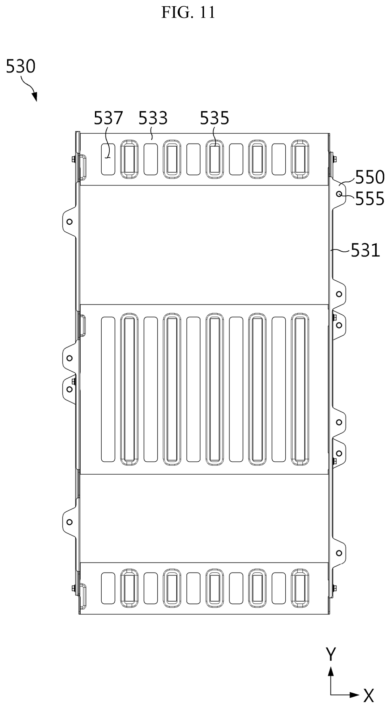

FIG. 9 is an exploded perspective view showing a cell array stack 500 of the battery pack 20 of FIG. 8, FIG. 10 is a drawing for illustrating a mounting guide 530 of the cell array stack 500 of FIG. 9, FIG. 11 is a plan view showing the mounting guide 530 of FIG. 10, and FIG. 12 is a side cross-sectional view showing a battery pack 20 according to another embodiment of the present disclosure.

Referring to FIGS. 9 to 12, the plurality of cell array structures 510, 520 of the cell array stack 500 may include a first cell array structure 510 and a second cell array structure 520.

The first cell array structure 510 may form a lower layer of the multi-stage stacking structure of the cell array stack 500. The first cell array structure 510 may include battery cells, cooling tubes, and a side frame, as in the former embodiment.

The second cell array structure 520 is disposed at the upper side (in the +Z-axis direction) of the first cell array structure 510 and may form an upper layer of the multi-stage stacking structure of the cell array stack 500. The second cell array structure 520 may also include battery cells, cooling tubes, and a side frame, as in the former embodiment.

The mounting guide 530 may separate the plurality of cell array structures 510, 520 in the stacking direction (Z-axis direction) such that a predetermined venting space V is formed between the plurality of cell array structures 510, 520. Specifically, the mounting guide 530 may separate the first cell array structure 510 and the second cell array structure 520 from each other in the stacking direction (Z-axis direction) such that the venting space V is formed between the first cell array structure 510 and the second cell array structure 520.

In this embodiment, the venting space V is formed between the first cell array structure 510 and the second cell array structure 520 in the stacking direction (Z-axis direction) through the mounting guide 530, thereby forming a predetermined space capable of preventing chain ignition.

The mounting guide 530 may include a guide body 531 and a support 533.

The guide body 531 may at least partially cover both side surfaces of the plurality of cell array structures 510, 520 in the stacking direction (Z-axis direction). The guide body 531 may be provided as a pair to at least partially cover both side surfaces of the first cell array structure 510 and the second cell array structure 520.

The case mounting portion 550 may be formed on the pair of guide bodies 531. The case mounting portion 550 may be provided in plurality and provided on each of the guide bodies 531. The plurality of case mounting portions 550 may be provided at the upper end (+Z-axis direction) and the lower end (-Z-axis direction) of each of the guide bodies 531, respectively. The case mounting portions 550 provided at the upper end (+Z-axis direction) of the guide bodies 531 may be arranged to be staggered from the case mounting portions 550 provided at the lower end (-Z-axis direction) of the guide bodies 531. This staggered arrangement is to prevent interference when coupling the case mounting portions 550 with the stack fixing portions 450, as in the former embodiment, and to further enhance the coupling stability.

The support 533 is connected to the guide body 531 and may be arranged between the plurality of cell array structures 510, 520 in the stacking direction (Z-axis direction). In this embodiment, the support 533 is arranged between the first cell array structure 510 and the second cell array structure 520 in the stacking direction (Z-axis direction) and may support the second cell array structure 520. The support 533 may guide a more stable stacking structure of the second cell array structure 520 provided at the upper side (+Z-axis direction) of the multi-stage stacking structure.

The support 533 may be provided in plurality. The plurality of supports 533 are arranged to be spaced apart from each other by a predetermined distance and may form the venting space V between the plurality of cell array structures 510, 520 in the stacking direction (Z-axis direction).

The support 533 may include a protrusion 535. A cell array structure 520 disposed at an upper side among the plurality of cell array structures 510, 520 in the stacking direction (Z-axis direction) may be placed on the protrusion 535. In this embodiment, the protrusion 535 may support a bottom portion of the second cell array structure 520. The protrusion 535 may include a buffer member, such as a buffer pad, for more stable support of the second cell array structure 520. In addition, the protrusion 535 may be provided in plurality to increase the support stability of the second cell array structure 520.

A venting opening 537 may be formed in the support 533. Through the venting opening 537, the venting space V may be secured more on the support 533.

The venting opening 537 may be provided in plurality. That is, the plurality of venting openings 537 may be formed in the support 533. The plurality of venting openings 537 may be provided between the protrusions 535. Specifically, the plurality of venting openings 537 may be provided between the plurality of protrusions 535, respectively, on the support 533. That is, one venting opening 537 may be provided between two protrusions 535, and one protrusion 535 may be provided between two venting openings 537.

In this way, in the embodiment of the present disclosure, through the case mounting portion 550 and the mounting guide 530 forming the venting space V, the plurality of cell array structures 510, 520 that are stacked in multi stages may be stably fixed to the pack case 400, and chain ignition or explosion that may be caused in an abnormal situation such as thermal runaway may be effectively prevented.

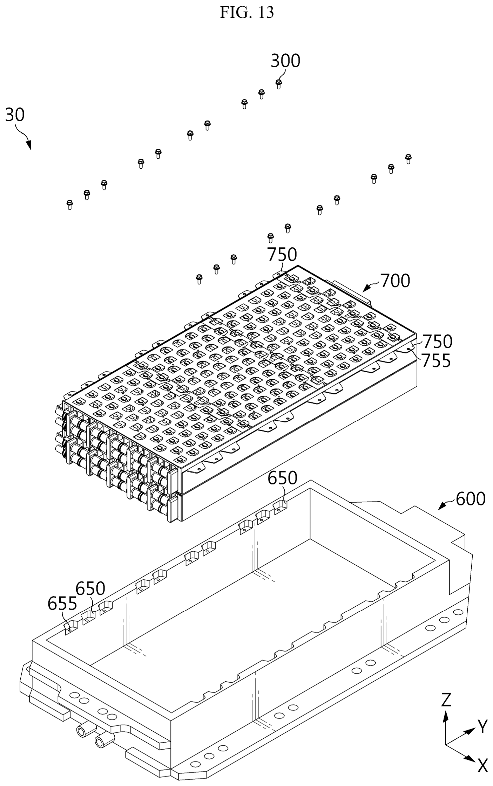

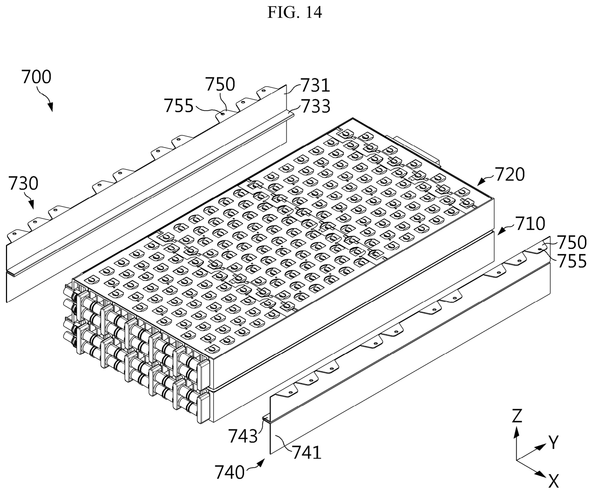

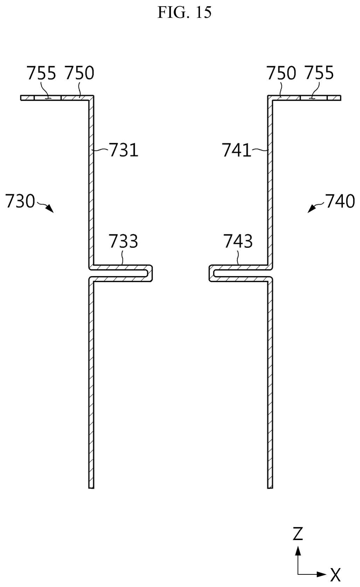

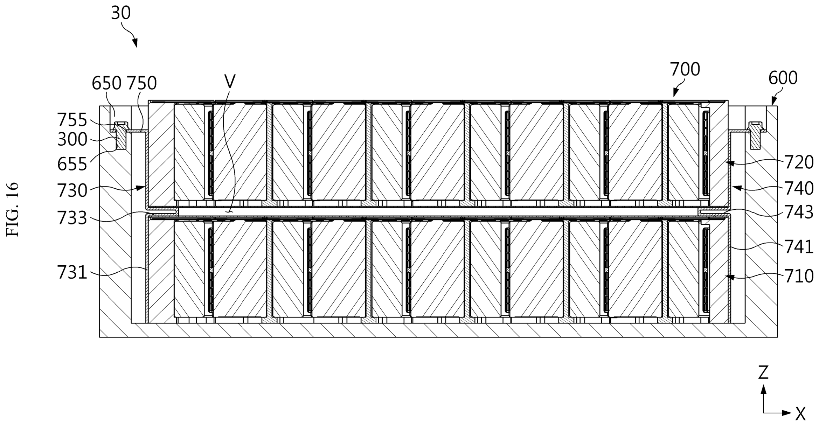

FIG. 13 is an exploded perspective view showing a battery pack 30 according to still another embodiment of the present disclosure, FIG. 14 is an exploded perspective view showing a cell array stack 700 of the battery pack 30 of FIG. 13, FIG. 15 is a side cross-sectional view showing a mounting guide 730, 740 of the cell array stack 700 of FIG. 14, and FIG. 16 is a side cross-sectional view showing a battery pack 30 according to still another embodiment of the present disclosure.

Since the battery pack 30 according to this embodiment is similar to the battery pack 20 of the former embodiment, components that are substantially identical or similar to those of the former embodiment will not be described in detail again, and components different from those of the former embodiment will be described in detail.

Referring to FIGS. 13 to 16, the battery pack 30 may include a pack case 600 and a cell array stack 700. In addition, the battery pack 30 may include a plurality of fastening members 300. The fastening member 300 is similar to the fastening member 300 of the former embodiment, and therefore will not be described in detail again.

The pack case 600 may include a stack fixing portion 650. The stack fixing portion 650 may have a fastening hole 655.

The cell array stack 700 may include a plurality of cell array structures 710, 720 and a mounting guide 730, 740 having a fixing portion 750.

The plurality of cell array structures 710, 720 may include a first cell array structure 710 and a second cell array structure 720.

The first cell array structure 710 and the second cell array structure 720 are similar to the first cell array structure 510 and the second cell array structure 520 of the former embodiment, and therefore will not be described in detail again.

The mounting guide 730, 740 may be provided as a pair. The pair of mounting guides 730, 740 may cover both side surfaces of the plurality of cell array structures 710 and 720, respectively, in the stacking direction (Z-axis direction). Specifically, the pair of mounting guides 730, 740 may be fitted to a predetermined depth so as to form a venting space V between the first cell array structure 710 and the second cell array structure 720 in the stacking direction (Z-axis direction).

The pair of mounting guides 730, 740 may include side covers 731, 741 and fitting portions 733, 743.

The side covers 731, 741 may cover the side surfaces of the plurality of cell array structures 710, 720. A case mounting portion 750 having a mounting hole 755 may be formed on the side covers 731, 741. The case mounting portion 750 may be provided in plurality. The plurality of case mounting portions 750 are formed on the side covers 731, 741, respectively, and may be provided in plurality along the longitudinal direction (Y-axis direction) of each of the side covers 731, 741.

The plurality of case mounting portions 750 are formed only at the upper end (+Z-axis direction) of each side cover 731, 741, and may have the same height in the stacking direction (Z-axis direction). The stack fixing portion 650 of the pack case 600 may be formed on at least one side of the pack case 600, specifically, on the upper portion of both edges of the pack case 600 corresponding to the height of the case mounting portion 750.

Therefore, in this embodiment, the plurality of case mounting portions 750 of the cell array stack 700 may be fixed to the upper portions of both edges of the pack case 600, which have the same height, thereby further increasing the efficiency of the assembly process.

In addition, in this embodiment, during the process of cutting the pack case 600 to form the stack fixing portion 650, the cutting depth of the stack fixing portion 650 in the stacking direction (Z-axis direction) may be reduced, thereby significantly increasing the efficiency of the cutting process.

The fitting portions 733, 743 protrude from the side covers 731, 743, and may be fitted between the plurality of cell array structures 710, 720 to a predetermined depth in the stacking direction (Z-axis direction). The fitting portions 733, 743 may form the venting space V for preventing chain ignition, etc., as being fitted to both ends of the first cell array structure 710 and the second side structure 720.

The fitting portions 733, 743 may be formed integrally with the side covers 731, 743. Specifically, the fitting portions 733, 743 may be formed integrally by bending from the side covers 731, 743.

In this embodiment, through the pair of mounting guides 730, 740 provided as an integrated structure, the plurality of cell array structures 710, 720 stacked in multi stages may be stably fixed to the pack case 600 with a more simplified structure, and chain ignition or explosion, which may be caused in abnormal situations such as thermal runaway, may be effectively prevented.

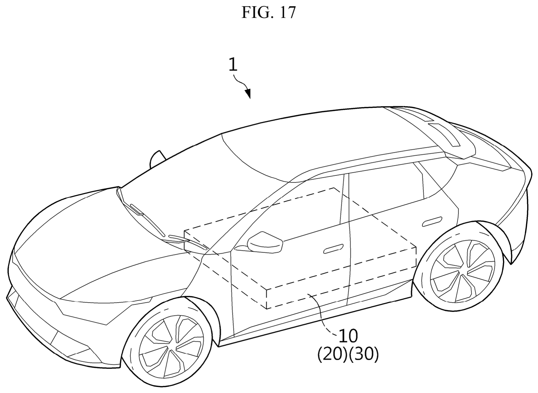

FIG. 17 is a drawing for illustrating a vehicle 1 according to an embodiment of the present disclosure.

Referring to FIG. 17, the vehicle 1 according to an embodiment of the present disclosure may include at least one battery pack 10, 20, 30 according to the above-described embodiment of the present disclosure. In addition, the vehicle 1 according to an embodiment of the present disclosure may further include various other components included in a vehicle, in addition to the battery pack 10, 20, 30. For example, the vehicle 1 according to an embodiment of the present disclosure may further include a vehicle body, a motor, and a control device such as an ECU (electronic control unit), in addition to the battery pack 10, 20, 30 according to an embodiment of the present disclosure.

In addition, the battery pack 10, 20, 30 according to an embodiment of the present disclosure may be provided to other devices, instruments, and equipment, such as an energy storage device (ESS) that uses secondary batteries, in addition to the vehicle 1.

According to various embodiments as above, it is possible to provide a battery pack 10, 20, 30 that may implement a more stable fixing structure, and a vehicle 1 including the battery pack.

In addition, according to various embodiments as above, it is possible to provide a battery pack 10, 20, 30 that may secure a venting space V capable of preventing chain ignition during a thermal event of a battery cell 211, 221, and a vehicle 1 including the battery pack.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a pack case having a predetermined accommodation space; and
a cell array stack including a plurality of cell array structures that are stacked in multi stages, the cell array stack having a case mounting portion fixed to at least one side wall of the pack case.

2. The battery pack according to claim 1,
wherein the at least one side wall of the pack case has a stack fixing portion that is coupled with the case mounting portion, and
wherein the stack fixing portion is provided to correspond to a shape of the case mounting portion.

3. The battery pack according to claim 2,
wherein the stack fixing portion is formed integrally with the pack case.

4. The battery pack according to claim 2,
wherein the stack fixing portion is formed as an insert groove having a predetermined depth on the at least one side wall of the pack case, and
wherein the case mounting portion is fitted into the stack fixing portion.

5. The battery pack according to claim 2,
wherein the stack fixing portion is prepared by cutting the pack case to have a predetermined depth.

6. The battery pack according to claim 2, further comprising:
at least one fastening member configured to connect the case mounting portion and the stack fixing portion.

7. The battery pack according to claim 1,
wherein the case mounting portion is provided in plurality for each of the cell array structures, and
wherein the case mounting portions of the respective cell array structures are arranged to be staggered.

8. The battery pack according to claim 1,
wherein the cell array stack includes a mounting guide provided between the plurality of cell array structures and the pack case, so that the case mounting portion is provided therein.

9. The battery pack according to claim 8,
wherein the mounting guide at least partially covers both side surfaces of the plurality of cell array structures in a stacking direction.

10. The battery pack according to claim 8,
wherein the mounting guide is interposed between the plurality of cell array structures in a stacking direction.

11. The battery pack according to claim 8,
wherein the mounting guide separates the plurality of cell array structures from each other in a stacking direction so that a predetermined venting space is formed between the plurality of cell array structures.

12. The battery pack according to claim 8,
wherein the mounting guide includes:
a guide body configured to at least partially cover both side surfaces of the plurality of cell array structures in a stacking direction; and
a support connected to the guide body and arranged between the plurality of cell array structures in the stacking direction.

13. The battery pack according to claim 12,
wherein the support is provided in plurality, and
wherein the plurality of supports are arranged to be spaced apart from each other by a predetermined distance to form a venting space between the plurality of cell array structures in the stacking direction.

14. The battery pack according to claim 12,
wherein the support has a protrusion on which a cell array structure, which is arranged at an upper side among the plurality of cell array structures in the stacking direction, is placed.

15. The battery pack according to claim 12,
wherein at least one venting opening is formed in the support.

16. The battery pack according to claim 14,
wherein a plurality of venting openings are formed in the support, and
wherein the plurality of venting openings are provided between the protrusions.

17. The battery pack according to claim 8,
wherein the mounting guide is provided as a pair, and
wherein the pair of mounting guides cover both side surfaces of the plurality of cell array structures in a stacking direction, respectively.

18. The battery pack according to claim 17,
wherein the pair of mounting guides include:
a side cover configured to cover a side surface of the plurality of cell array structures and having the case mounting portion; and
a fitting portion configured to protrude from the side cover and fitted between the plurality of cell array structures in the stacking direction to a predetermined depth.

19. The battery pack according to claim 17,
wherein the fitting portion is formed integrally with the side cover and is formed by bending from the side cover.

20. A vehicle comprising at least one battery pack according to any one of claims 1 to 19.
